# EUROPEAN PATENT APPLICATION

(11) **EP 2 372 528 A1**
(43) Date of publication of application: **05.10.2011**
(21) Application number: 10275029.6
(22) Date of filing: 22.03.2010
(51) Int. Cl.: G06F 7/58

(54) **Pseudo-noise generator**

(71) Applicant: Astrium Limited, Stevenage, Hertfordshire SG1 2AS (GB)
(72) Inventor: The designation of the inventor has not yet been filed
(74) Representative: Johansson, Anna Olivia

(57) **Abstract**

The present invention relates to a pseudo-noise generator comprising a plurality of pseudo-random number generators and an averaging unit. The averaging unit is arranged to receive a plurality of pseudo-random numbers from the plurality of pseudo-random number generators, calculate a mean value of the plurality of pseudo-random numbers, and output said mean value as a digital pseudo-noise signal.

## Description

### Field of the Invention

The present invention relates to pseudo-noise generation, in particular in relation to generating a pseudo-noise signal to be input to a device for test and measurement purposes.

### Background

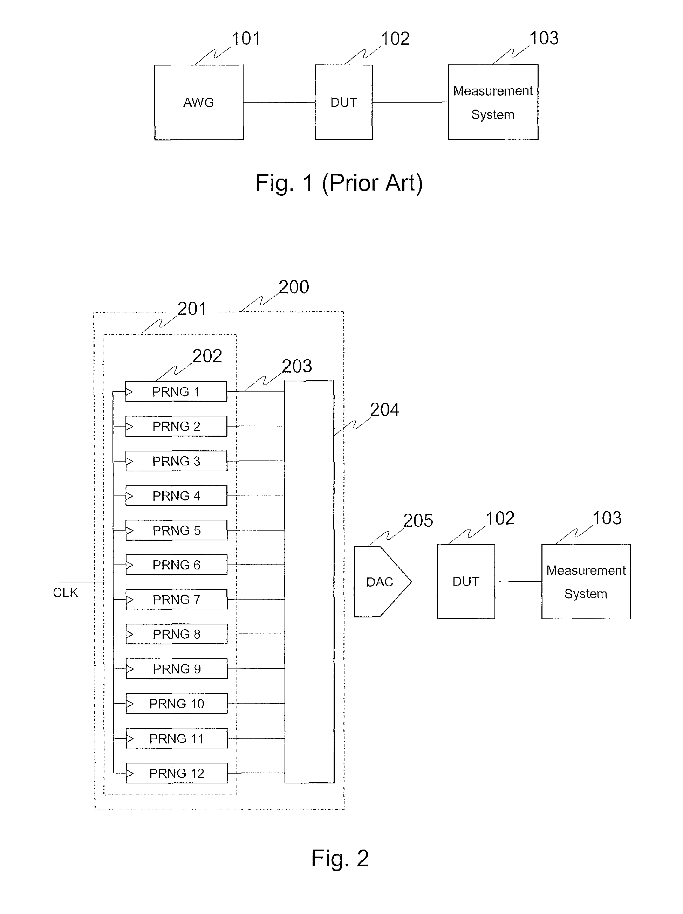

Arbitrary waveform generators (AWGs) are commonly used for test and measurement applications, in which electronic apparatus is tested by applying a known input signal and monitoring a response. Figure 1 illustrates a typical test system, comprising an AWG 101 for providing an output test signal to device-under-test (DUT) 102 which is further connected to a measurement system 103. An AWG has an internal memory which is used to store a series of points of arbitrary amplitude, defining an arbitrary waveform. The form of the output signal may be further modified by adjusting the transition between subsequent points. For example, if two arbitrary amplitudes are defined, a step-change transition will produce a square wave, whereas a linear interpolation will produce a triangular wave. The AWG is therefore able to generate a wide range of arbitrary waveforms, subject to certain limitations such as available memory capacity.

The waveform generated by an AWG may be provided to the DUT as either a repeated signal or a single-shot signal. The maximum repeat period of a repeated signal, or maximum duration of a single-shot signal, is determined by the desired sampling rate and the available memory 'depth' (the number of points which can be stored). For example, a typical memory depth for a standard AWG is ∼1.7×10⁷ samples, which gives a maximum repeat period of 17 ms at a 1 giga-sample per second (GSPS) rate.

AWGs are commonly used to generate test telecommunications signals which mimic the traffic and noise that a device would typically encounter during normal use. However, in order to simulate real-world noise accurately, it is necessary for the noise component of the test signal to be aperiodic. This makes an AWG unsuitable for use as a noise source when a test signal is required with a periodicity greater than that which can be achieved given the available memory depth. For example, when measuring a noise-to-power ratio (NPR) of a GSPS analogue-to-digital converter (ADC) for use in a digital signal processor (DSP), it may be necessary to apply a wideband near-baseband signal and integrate the output over a period of 100 s. For an AWG to generate an aperiodic signal with a 1 GSPS sampling rate and duration of 100 s, a memory depth of 1×10¹¹ is required, which is infeasible with current technology.

In cases such as this, the solution at present is to use a noise diode which provides a truly random signal. However, noise diodes suffer from the drawback that they require frequent recalibration. Furthermore, as a random signal is not reproducible, any test conducted using a noise diode as a noise source is never truly repeatable.

### Summary of the Invention

The present invention aims to address the drawbacks inherent in known arrangements.

According to the present invention, there is provided a pseudo-noise generator according to claim 1, and a method of generating a pseudo-noise signal according to claim 14.

According to the present invention, there is provided a pseudo-noise generator comprising a plurality of pseudo-random number generators, and an averaging unit arranged to receive a plurality of pseudo-random numbers from the plurality of pseudo-random number generators, calculate a mean value of the plurality of pseudo-random numbers, and output said mean value as a digital pseudo-noise signal.

Each one of the plurality of pseudo-random number generators may comprise a plurality of linear feedback shift registers.

The plurality of linear feedback shift registers may be arranged in parallel and provided with a common clock input, such that during a clock cycle each one of said plurality of linear feedback shift registers outputs a pseudo-random bit.

A plurality of said pseudo-random bits outputted during said clock cycle may form one of the plurality of pseudo-random numbers.

The plurality of pseudo-random bits may be outputted in parallel to the averaging unit.

Each linear feedback shift register may be further arranged to output a maximal-length sequence.

The averaging unit may comprise a plurality of binary adders arranged to calculate the sum of two or more ones of the plurality of pseudo-random numbers.

Each adder may be further arranged to divide said calculated sum by the number of inputs into said adders, such that said adder outputs a mean of the input pseudo-random numbers.

The plurality of adders may be arranged to calculate an overall sum of the plurality of pseudo-random numbers, and the averaging unit may further comprise means for dividing said overall sum by the total number of input pseudo-random numbers so as to calculate a mean of the plurality of pseudo-random numbers.

The averaging unit may be further arranged to output the digital pseudo-noise signal to a digital-to-analogue converter so as to generate an analogue pseudo-noise signal.

The pseudo-noise generator may be provided as a field-programmable gate array.

According to the present invention, there is provided a method of generating a pseudo-noise signal, the method comprising generating a plurality of pseudo-random numbers, calculating a mean value of the plurality of pseudo-random numbers, and outputting said average as a digital pseudo-noise signal.

### Brief Description of the Drawings

Embodiments of the invention will now be described, by way of example, with reference to Figs. 2 to 12 of the accompanying drawings, in which:
Figure 1 illustrates a system for testing a device using an arbitrary waveform generator;
Figure 2 illustrates the structure of a pseudo-noise generator according to the present invention according to an example of the present invention;
Figure 3 illustrates a pseudo-random number generator for use in a pseudo-noise generator according to an example of the present invention;
Figure 4 illustrates a 48-bit linear feedback shift register for use in a pseudo-noise generator according to an example of the present invention;
Figures 5a to 5c illustrate schematically the operation of a 4-bit linear feedback shift register;
Figure 6 shows a histogram illustrating the output of a 10-bit pseudo-random number generator over 10⁵ samples, according to an example of the present invention;
Figure 7 shows a histogram comparing the outputs of two pseudo-noise generators comprising different numbers of pseudo-random number generators according to an example of the present invention;
Figure 8 shows a histogram illustrating the output of a pseudo-noise generator comprising twelve pseudo-random number generators according to an example of the present invention;
Figure 9 shows a histogram illustrating an idealised Gaussian distribution, scaled for comparison with Fig. 8;
Figure 10 illustrates the structure of an averaging unit for use in a pseudo-noise generator according to an example of the present invention;
Figure 11 illustrates a 4-bit ripple-carry adder; and
Figure 12 illustrates a modified 10-bit ripple-carry adder arranged to output the mean of two inputs, according to an example of the present invention.

### Detailed Description

Referring now to Fig. 2, the structure of a pseudo-noise generator 200 is illustrated according to an example of the present invention. The pseudo-noise generator (PNG) 200 comprises a plurality of pseudo-random number generators (PRNGs) 201, which are arranged in parallel and share a common clock input CLK. In the present example the plurality of PRNGs 201 comprises twelve individual PRNGs 1-12, but in other embodiments any number of PRNGs may be provided.

In response to a clock pulse each PRNG generates a pseudo-random number and outputs this number to an averaging unit 204. A pseudo-random number is one which statistically appears to be random, when a sequence of such numbers is examined, but which is actually derived according to a deterministic process. The averaging unit 204 is arranged to calculate the arithmetic mean of the plurality of pseudo-random numbers received from the plurality of PRNGs, and this calculated arithmetic mean is then output to a digital-to-analogue converter (DAC) 205. Since each PRNG generates a new pseudo-random number every clock cycle, the output of the averaging unit 204 over multiple clock cycles comprises a digital pseudo-noise signal. The digital pseudo-noise signal is converted by the DAC 205 into an analogue pseudo-noise signal and sent to the DUT 102.

In the present example, the PNG 200 is illustrated as comprising a stand-alone unit connected directly to a DUT 102 via a DAC 205. However, the skilled person will readily appreciate that other embodiments are possible. For example, the PNG 200 and DAC 205 may be incorporated into an AWG to provide a base noise signal which is combined with a stored arbitrary waveform before being output to the DUT 102.

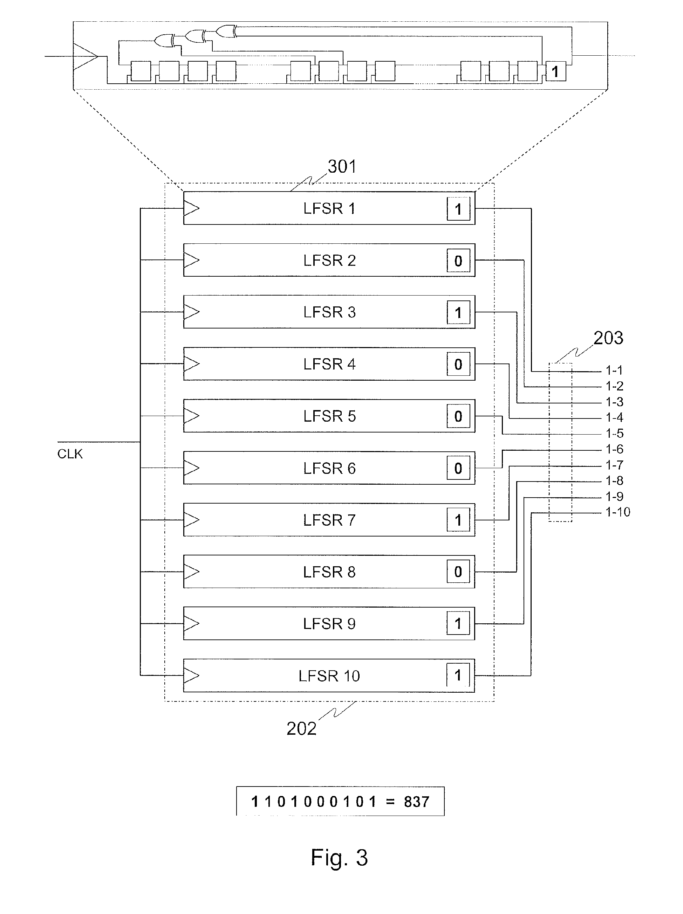

Referring now to Fig. 3, the structure of a single PRNG 202 is illustrated. The PRNG 202 in Fig. 3 corresponds to the first PRNG 202 in Fig. 2. In the present example, the PRNG 202 is a 10-bit PRNG comprising ten linear feedback shift registers (LFSRs) LFSR 1-10, arranged in parallel. For a single clock cycle, each LFSR outputs a single bit (i.e. 0 or 1); the detailed structure and operation of an LFSR will be described later. Together, the ten output bits from the plurality of LFSRs form a 10-bit binary word. The skilled person will readily appreciate that the present invention is not limited to a PRNG comprising ten LFSRs, but rather an arbitrary number N LFSRs may be arranged to output an N-bit word.

Figure 3 also illustrates how the individual bits outputted by LFSRs 1-10 are interpreted as a 10-bit binary word. In the present example, during the current clock cycle LFSR 1 generates an output bit comprising a '1', LFSR 2 generates an output bit comprising a '0', LFSR 3 generates an output bit comprising a '1', and so on. Each LFSR is provided with a separate connection to the averaging means (cf. Fig. 2), such that the connection 203 illustrated in Fig. 2 actually comprises a plurality of conductors 1-1 to 1-10 arranged to carry the ten bits of the output word in parallel. The averaging means (not shown in Fig. 3) is arranged to interpret the 10-bit word as a binary weighted quantity, i.e. bit 1-1 carries a weighting of 2⁰, bit 1-2 carries a weighting of 2¹, bit 1-3 carries a weighting of 2², and so on. In the present example, the 10-bit word is therefore interpreted as the binary number 1101000101, corresponding to 837 in base-10.

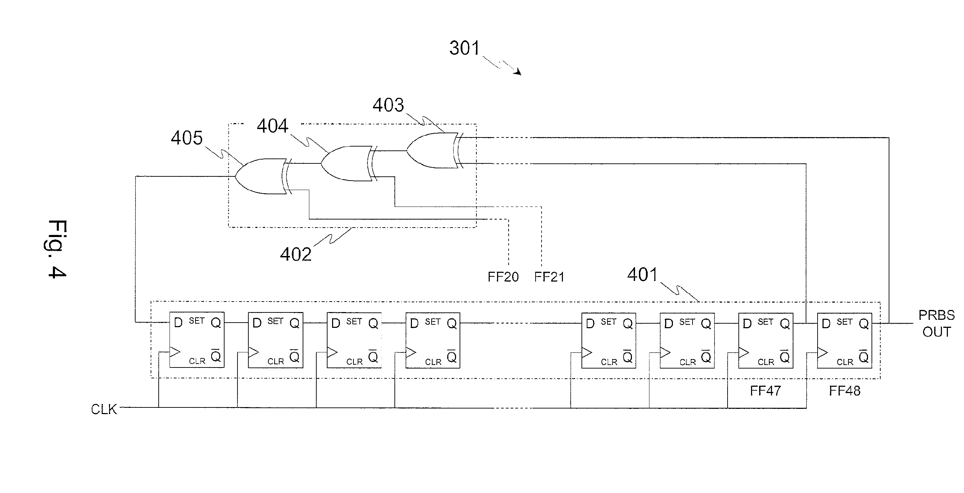

The structure of a single LFSR 301 according to an example of the present invention is illustrated in detail in Fig. 4. In the present example, the LFSR 301 comprises a 48-bit LFSR having a plurality of clocked flip-flops arranged to form a shift register 401. For clarity, only the 1^{st}-4^{th} and 45^{th}-48^{th} flip-flops are illustrated. The LFSR 301 further comprises a plurality of exclusive-OR (XOR) gates 402 which are arranged to receive inputs from the 20^{th} and 21^{st} flip-flops FF20, FF21 (not shown) and the 47^{th} and 48^{th} flip-flops FF47, FF48. At any given time therefore, the output bit produced by the third XOR gate 405 is determined by the current states of the 20^{th}, 21^{st}, 47^{th} and 48^{th} flip-flops. This output bit is fed back into the shift register 401 as an input of the first flip-flop. The output of the LFSR 301 over a number of clock cycles comprises a pseudo-random binary sequence (PRBS).

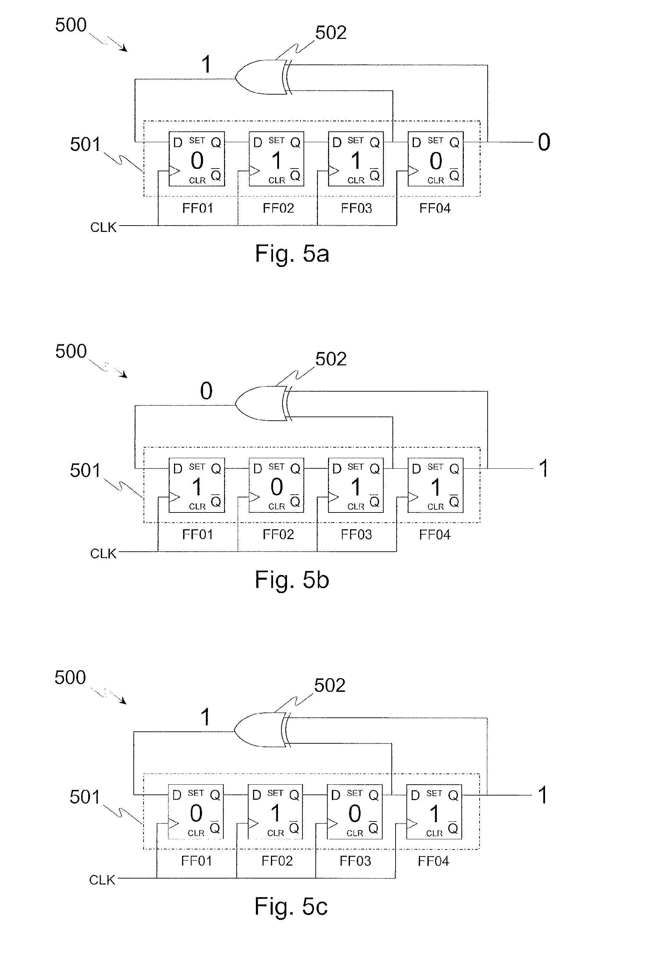

The detailed operation of a 4-bit LFSR will now be described with reference to Figs. 5a to 5c. A 4-bit LFSR is described for convenience, but the skilled person will appreciate that the general principles are equally applicable to any *n*-bit LFSR, such as the 48-bit LFSR shown in Fig. 4. In the present example, the 4-bit LFSR 500 comprises four clocked flip-flops FF01, FF02, FF03, FF04, and an exclusive-or (XOR) logic gate 502. In general terms, an *n*-bit LFSR comprises a plurality of *n* flip-flops 501 and one or more XOR gates. In order for the shift feedback register to be linear, the feedback function must not have a net logic inversion.

The second, third and fourth flip-flops FF02, FF03, FF04 are arranged such that the data input D of each flip-flop is connected to the output Q of the preceding flip-flop. This is a standard arrangement for a shift register, in which a clock pulse (specifically, the rising or falling edge of the pulse) triggers the flip-flops to simultaneously change their state to that of the preceding flip-flop, thereby shifting the entire sequence of *n*-bits along the register (i.e. towards the right in Fig. 5a). In the 4-bit LFSR 500, the first flip-flop FF01 has its data input D connected to the output of the XOR gate 502, which in turn takes its inputs from the outputs Q of the third and fourth flip-flops FF03, FF04.

The LFSR 300 is initialised by setting each one of the plurality of flip-flops 501 to a predetermined initial state (the 'seed' state) by setting either the SET or CLR inputs to high or low (in Figs. 5a to 5c, connections to the SET and CLR inputs are omitted for clarity). Figure 5a illustrates the LFSR 500 initialised such that the first, second, third and fourth flip-flops FF01, FF02, FF03, FF04 are set to 0, 1, 1, and 0 respectively. The seed state may be arbitrarily chosen, with the restriction that the all-zeros state is excluded as the LFSR would remain locked-up in this state.

The output Q of the final flip-flop (in the present example, the fourth flip-flop FF04) is taken as the output of the LFSR 500. As shown in Fig. 5a, the output Q of the fourth flip-flop FF04 is also fed back into the XOR gate 302, as is the output Q of the third flip-flop FF03. The connections to the XOR gate (the output and both inputs) are referred to as feedback taps, and denoted by numerals corresponding to the positions of the relevant flip-flops in the overall sequence. Specifically, in the present example, the LFSR 500 has feedback taps 1, 3 and 4 corresponding to the first, third and fourth flip-flops FF01, FF03, FF04.

In the initial state illustrated in Fig. 5a, the XOR gate 502 has inputs 1 and 0 from the third and fourth flip-flops FF03, FF04 respectively. The output of the XOR gate 502 in this state is therefore 1.

Referring now to Fig. 5b, the LFSR 500 is illustrated after a single clock cycle has elapsed, relative to the state illustrated in Fig. 5a. The second, third and fourth flip-flops FF02, FF03, FF04 have each changed state according to the previous state of the first, second and third flip-flops FF01, FF02, FF03 respectively, i.e. 0, 1, and 1. At the same time, the first flip-flop FF01 has changed state according to the previous output of the XOR gate 502, i.e. 1. In this state, the output of the LFSR 500 is now 1. As both the third and fourth flip-flops FF03, FF04 are set to 1, the output of the XOR gate 502 becomes 0.

Referring now to Fig. 5c, the LFSR 500 is illustrated after a single clock cycle has elapsed, relative to the state illustrated in Fig. 5b. The second, third and fourth flip-flops FF02, FF03, FF04 have each changed state according to the previous state of the first, second and third flip-flops FF01, FF02, FF03 respectively, i.e. 1, 0, and 1. At the same time, the first flip-flop FF01 has changed state according to the previous output of the XOR gate 502, i.e. 0. In this state, the output of the LFSR 500 is still 1. As the third and fourth flip-flops FF03, FF04 are set to 0 and 1 respectively, the output of the XOR gate 502 becomes 1.

In this manner, the LFSR 500 continues to change state each clock cycle. An *n*-bit LFSR has a maximum number of possible states of 2*ⁿ*-1, as there are *2ⁿ* possible combinations of *n* bits, minus the excluded state (i.e. all-zeroes). The 4-bit LFSR 500 illustrated in Figs. 5a to 5c therefore has 15 possible states. Furthermore, an LFSR may or may not be maximal-length, depending on which number flip-flops are used as feedback taps. A maximal-length LFSR is one which cycles through all 2*ⁿ*-1 possible states before repeating. It can be mathematically shown that there are multiple combinations of feedback taps which can produce maximal-length sequences, for any given LFSR.

Table 1 shows repeat periods for LFSRs comprising varying numbers of flip-flops (n). The repeat period is calculated assuming that each LFSR is maximal-length (i.e. steps through all 2ⁿ-1 states before repeating), and that a sample rate of 1 GSPS is used.

**Table 1**

| **n** | **Repeat period (s)** |
|---|---|
| 16 | 6.554 × 10⁻⁵ |
| 24 | 1.678 × 10⁻² |
| 32 | 4.295 × 10⁰ |
| 40 | 1.100 × 10³ |
| 48 | 2.815 × 10⁵ |

Table 2 illustrates the probability P() of an *n*-bit LFSR outputting either a 0 or a 1 at any given time. As the all-zeroes state is excluded when using XOR gates, the probability of outputting a 1 is slightly higher than the probability of outputting a 0, but as n increases both probabilities tend asymptotically to ½.

**Table 2**

| **n** | **P(0)** | **P(1)** |
|---|---|---|
| 16 | 0.499992370489052 | 0.500007629510948 |
| 24 | 0.499999970197676 | 0.500000029802324 |
| 32 | 0.499999999883585 | 0.500000000116415 |
| 40 | 0.499999999999545 | 0.500000000000455 |
| 48 | 0.499999999999998 | 0.500000000000002 |

The LFSR 301 shown in Fig. 4 therefore comprises 48 flip-flops as this provides a long repeat period (2.815 × 10⁵ s). A PRNG as illustrated in Fig. 3, comprising 48-bit LFSRs, will therefore also exhibit a repeat time of 2.815 × 10⁵ s, whilst generating a pseudo-white noise output as 0 s and 1 s will be output by each LFSR with near-equal probabilities.

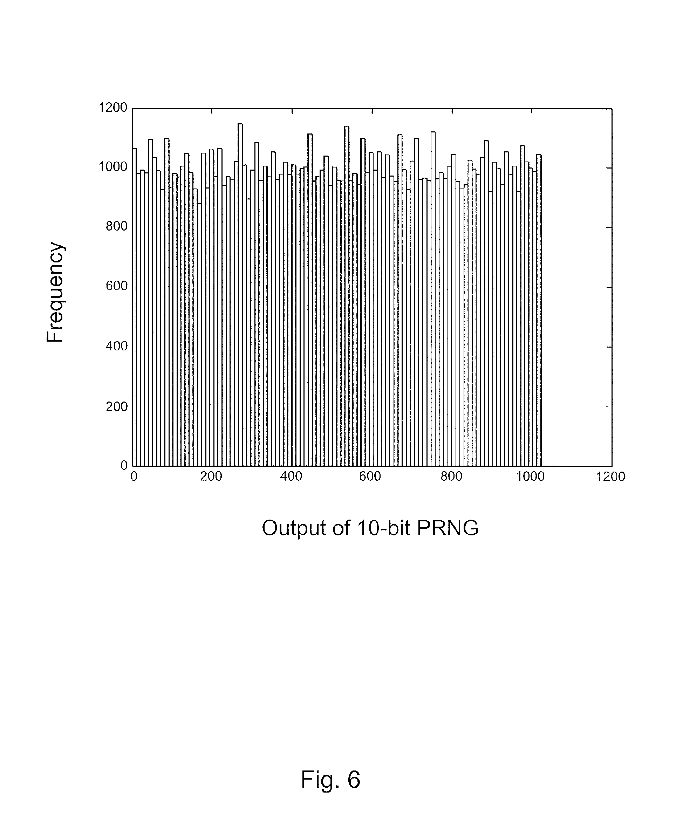

Referring now to Fig. 6, a histogram is provided showing the output of the 10-bit PRNG 202 of Fig. 3, over a run of 10⁵ samples (i.e. 10⁵ clock cycles). The output of the 10-bit PRNG 202 can take any integer value from 0 to 1023 (corresponding to binary numbers 0000000000 and 1111111111 respectively). In Fig. 6, the range 0 to 1023 is divided into 100 histogram bins. As the output of the PRNG 202 is pseudo-random (i.e. statistically random, cf. Table 2), it is expected that for a sufficiently high number of samples the output values will be evenly distributed across the histogram bins (cf. white noise having constant spectral power density). The observed deviation in Fig. 6 from this ideal distribution is due to the finite number of samples (10⁵).

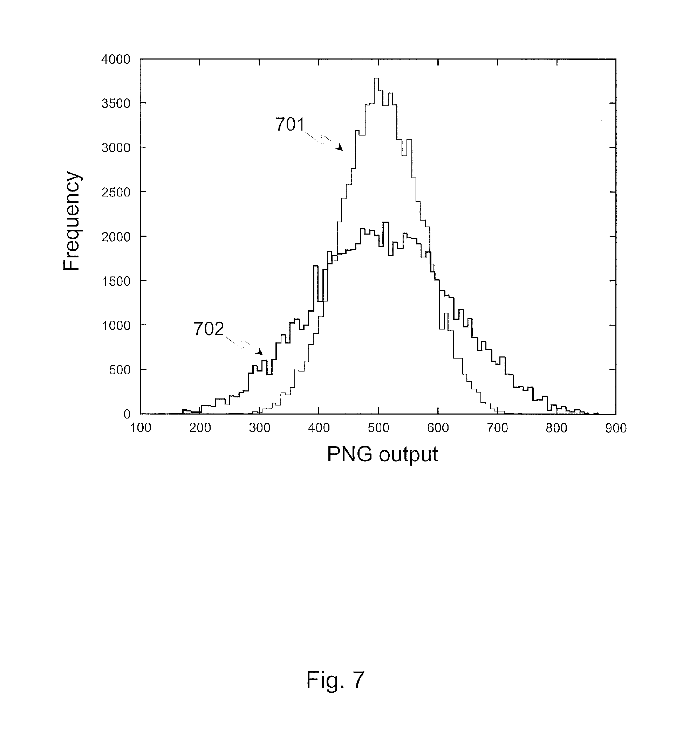

As described earlier with reference to Fig. 2, the output of the PNG is derived by averaging the outputs (i.e. calculating the arithmetic mean) of a plurality of PRNGs. If the PRNGs all generate output words of the same length (e.g. 10 bits in the present example), and if they each comprise different arrangements of LFSRs, the averaged output has an amplitude distribution which is approximately Gaussian. Figure 7 illustrates histograms (shown in outline form for clarity) of the outputs derived by averaging 18 PRNGs (line 701) and 6 PRNGs (line 702). From Fig. 7, the skilled person will appreciate that the width of the distribution can therefore be modified by varying the number of PRNGs used.

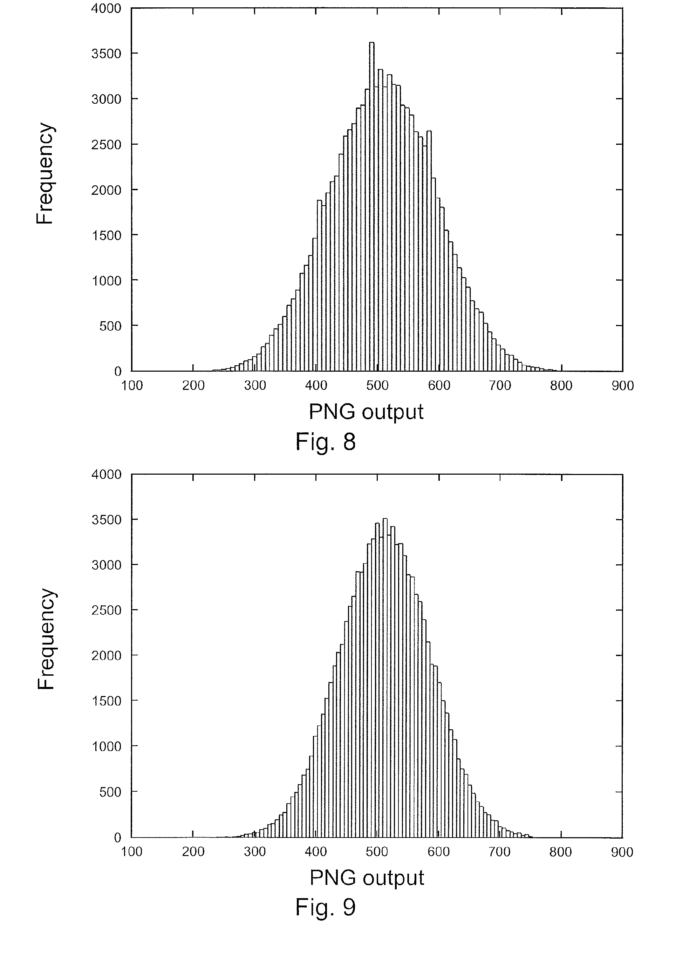

In the PNG 200 of Fig. 2, twelve PRNGs are used as this number is found to provide an output which closely approximates the Gaussian distribution, without unduly increasing the complexity and power consumption of the device. Figure 8 is an amplitude histogram for the PNG 200 of Fig. 2, comprising twelve 10-bit PRNGs. For comparison, an amplitude histogram illustrating an idealised Gaussian distribution is illustrated in Fig. 9. A PNG which generates pseudo-noise with a Gaussian amplitude distribution may be particularly desirable when testing equipment for use in space-based applications (e.g. telecommunications satellites), which typically encounter environmental noise that obeys Gaussian statistics.

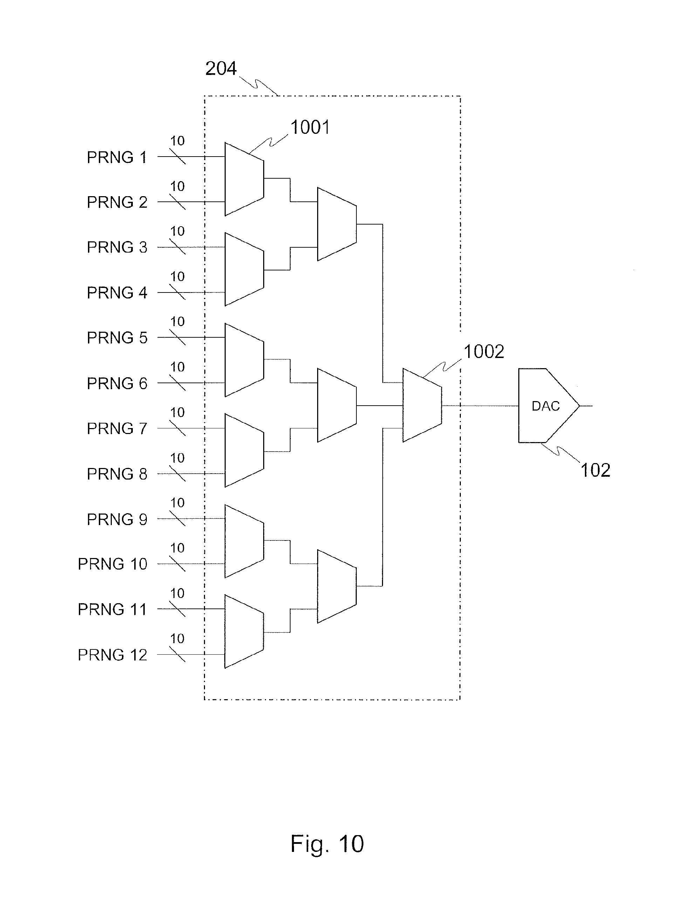

Figure 10 illustrates the structure of an averaging unit 204 according to an example of the present invention. The averaging unit 204 comprises a plurality of pipelined adders, which in the present example are each arranged to perform division on the calculated sum of the inputs so as to calculate an average of the inputs. For example, the first adder 1001 is arranged to receive the outputs of the first and second PRNGs, divide the calculated sum by two, and output the result to the next adder. The skilled person will appreciate, however, that it is not essential to perform division at each stage. In an alternative embodiment, each adder may be arranged to output the sum of its inputs to the next adder in the sequence, with the output of the final adder 1002 then being divided as appropriate (i.e. by twelve in the present example) before being passed to the DAC 102.

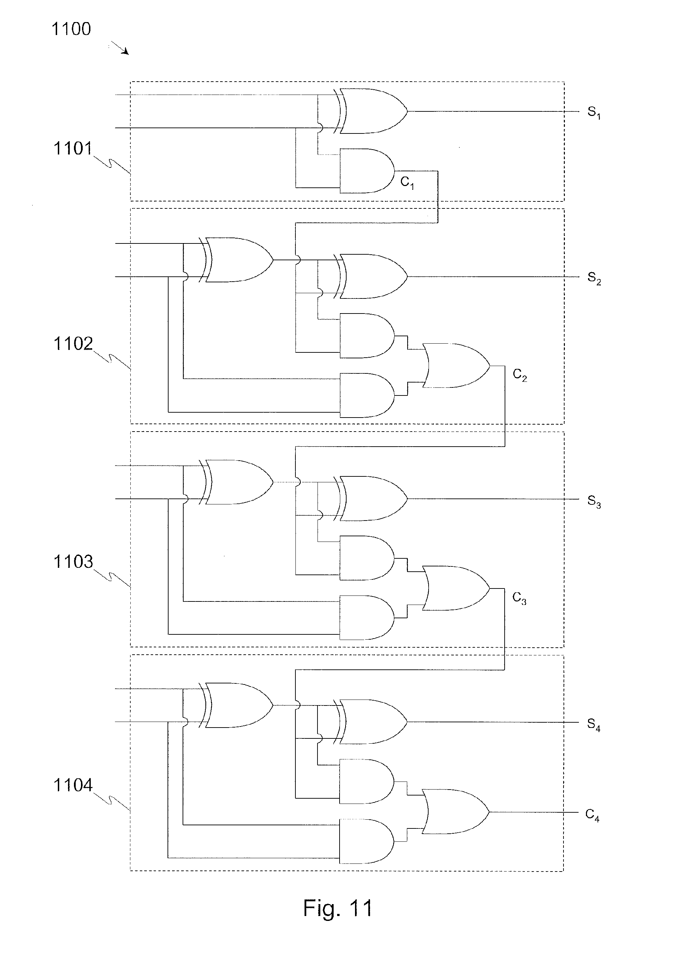

Various types of adders are known in the art, such as a ripple-carry adder 1100 illustrated in Fig. 11. The skilled person will be familiar with standard ripple-carry adders, and so the operation of the adder 1100 will not be described in detail. In the present example, the adder 1100 is a 4-bit adder comprising a binary half-adder 1101 and three binary full-adders 1102, 1103, 1104. The half adder 1101 and full-adders 1102, 1103,1104 are arranged to output a plurality of sum bits s₁, s₂, s₃, s₄ and a plurality of carry bits c₁, c₂, c₃, c₄. The final carry bit c₄ is output as the final bit of an output word which also comprises the plurality of sum bits s₁, s₂, s₃, s₄. The 4-bit adder 1100 therefore generates a 5-bit output word comprising the sum of the two 4-bit input words. As explained above in relation to Fig. 10, when using such an adder in the averaging unit 204 it is further required either to include means for dividing the output of each adder by two, thereby calculating the mean of the two inputs, or to include means for dividing the output of the final adder as appropriate.

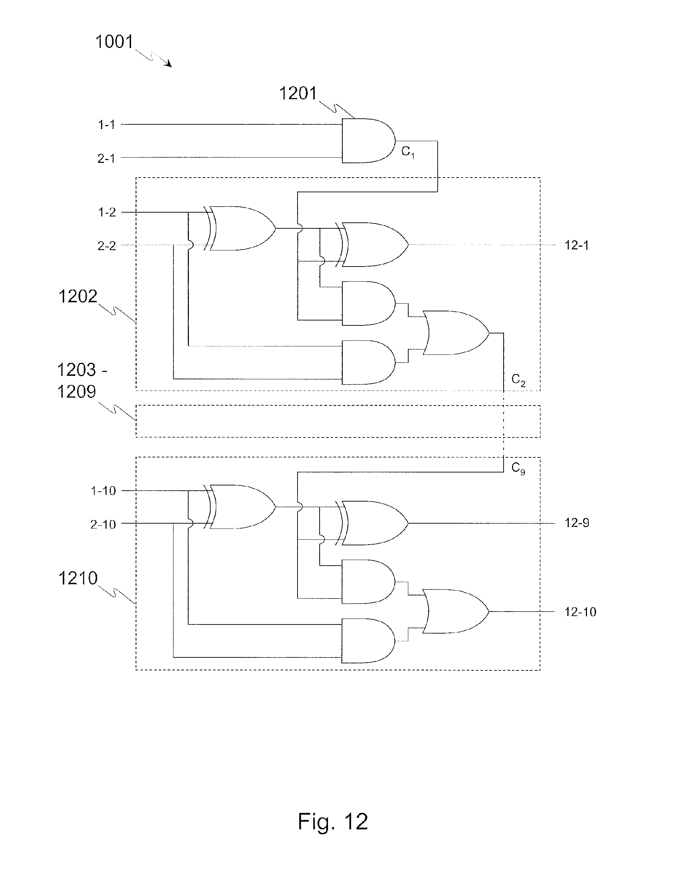

Figure 12 illustrates a 10-bit adder 1001 according to an example of the present invention, which is arranged to calculate the sum of two inputs and further divide the sum by two. The 10-bit adder 1001 corresponds to the first adder 1001 illustrated in Fig. 10. The 10-bit adder 1001 is provided with a first plurality of inputs 1-1 to 1-10 for receiving, respectively, bits 1 to 10 of the output 10-bit word from the first PRNG, and a second plurality of inputs 2-1 to 2-10 for similarly receiving the output 10-bit word from the second PRNG. For clarity, only the first, second and tenth pairs of inputs 1-1, 2-1, 1-2, 2-2, 1-10, 2-10 are illustrated.

As with the 4-bit adder 1100 illustrated in Fig. 11, the 10-bit adder 1001 comprises a plurality of binary full-adders 1202-1210 (for clarity, only the first and last full-adders 1202, 1210 are illustrated). However, the 10-bit adder 1001 differs from a standard ripple-carry adder in that the least-significant input bits 1-1, 2-1 are not input into a binary half-adder, but are input directly into an AND gate 1201. The output of this AND gate 1201 comprises a first carry bit c₁ which is input into the first half-adder 1202. As no output bit is generated directly from the least-significant input bits 1-1, 2-1, the 10-bit adder therefore outputs a 10-bit output word rather than an 11-bit output word (cf. Fig. 11, in which the 4-bit adder 1100 outputs a 5-bit word).

The skilled person will appreciate that the 10-bit output word generated by the 10-bit adder 1001 corresponds to an 11-bit output word which would be generated by a standard 10-bit ripple-carry adder, but with the least-significant bit discarded. This has the effect of providing an output 10-bit word which corresponds to half the sum of the input 10-bit words, rounded down to the nearest integer. For example, if the sum of two inputs is 1627, a standard 10-bit adder would output 11001011011 (1627 in base-10) whereas the 10-bit adder 1001 of Fig. 12 would output 1100101101 (813 in base-10).

Rounding down in this way can introduce slight errors when performed multiple times in succession (for example in the averaging unit 204 of Fig. 10, comprising adders arranged in series), but in many embodiments such errors may be insignificant. Furthermore, simplifying the first stage of the adder reduces the propagation time for the carry bits c₁-c₁₀ to flow through the adder, thereby increasing the speed of operation of the adder. Also, in the present example, as the first adder 1001 rounds down and outputs a 10-bit number rather than an 11-bit number, the subsequent adder needs only be a 10-bit adder rather than an 11-bit adder. As a 10-bit adder will typically operate faster than an 11-bit adder, rounding down at each stage may further increase the overall operating speed of the averaging means 204.

The skilled person will appreciate that other types of adder may be substituted in the present invention. For example, the time taken for carry bits to propagate throughout a ripple-carry adder increases as the number of input bits increases. In some embodiments, the propagation time may prevent the PNG from operating at the desired sample rates (e.g. 1 GSPS), in which case the skilled person may substitute faster adders (e.g. carry look-ahead adders).

Similarly, whilst certain embodiments of the invention have been described above, it would be clear to the skilled person that many variations and modifications are possible while still falling within the scope of the invention as defined by the claims.

For example, although examples of the invention have been described as comprising a plurality of LFSRs, alternative pseudo-random number generators may be substituted as appropriate. Non-linear shift feedback registers may be substituted, comprising other logic gates than XOR, in order to provide a non-gaussian output. Alternatively, various different output profiles may be provided by other means, such as incorporating PRNGs of different lengths, or arranging the averaging unit to calculate a weighted average.

In certain embodiments, the PNG is implemented in a field-programmable gate array (FPGA) which is programmed according to a set of instructions stored on a memory chip. This arrangement allows a user to readily modify specific features of the PNG. As an example, a user-defined repeat period may be set by adjusting the length of the LFSRs used in each PRNG. Similarly, an option may be provided to bypass the DAC such that a digital pseudo-noise output is sent directly to the DUT.

By combining the outputs of a plurality of PRNGs in an averaging unit, the PNG is able to provide an output pseudo-noise signal with an amplitude profile which is different to that of the output signal produced by a single LFSR. For example, the output signal of the PNG may have a Gaussian amplitude profile. As each PRNG comprises a plurality of LFSRs, the output signal is completely reproducible, and may be controlled to have a long repeat period without significantly increasing the complexity of the PNG or requiring a large memory capacity to store the output waveform (cf. arbitrary waveform generators). Furthermore, when the hardware of the PNG is configurable, for example when implemented in an FPGA, the amplitude profile of the output signal may be finely adjusted by varying such parameters as the number of PRNGs used, their individual lengths, the individual feedback tap arrangements, and the structure of the averaging unit itself. The output signal can therefore be controlled to accurately match an amplitude profile of a real-world noise signal, for any particular application.

## Claims

1. A pseudo-noise generator comprising:
a plurality of pseudo-random number generators; and
an averaging unit arranged to receive a plurality of pseudo-random numbers from the plurality of pseudo-random number generators, calculate a mean value of the plurality of pseudo-random numbers, and output said mean value as a digital pseudo-noise signal.

2. The pseudo-noise generator according to claim 1, wherein each one of the plurality of pseudo-random number generators comprises a plurality of linear feedback shift registers.

3. The pseudo-noise generator according to claim 2, wherein the plurality of linear feedback shift registers are arranged in parallel and provided with a common clock input, such that during a clock cycle each one of said plurality of linear feedback shift registers outputs a pseudo-random bit.

4. The pseudo-noise generator according to claim 3, wherein a plurality of said pseudo-random bits outputted during said clock cycle forms one of the plurality of pseudo-random numbers.

5. The pseudo-noise generator according to claim 4, wherein the plurality of pseudo-random bits are output in parallel to the averaging unit.

6. The pseudo-noise generator according to any preceding claim, wherein each linear feedback shift register is arranged to output a maximal-length sequence.

7. The pseudo-noise generator according to any preceding claim, wherein the averaging unit comprises a plurality of binary adders arranged to calculate the sum of two or more ones of the plurality of pseudo-random numbers.

8. The pseudo-noise generator according to claim 7, wherein each adder is further arranged to divide said calculated sum by the number of inputs into said adders, such that said adder outputs a mean of the input pseudo-random numbers.

9. The pseudo-noise generator according to claim 7, wherein the plurality of adders are arranged to calculate an overall sum of the plurality of pseudo-random numbers, the averaging unit further comprising means for dividing said overall sum by the total number of input pseudo-random numbers so as to calculate a mean of the plurality of pseudo-random numbers.

10. The pseudo-noise generator according to any preceding claim, wherein the averaging unit is further arranged to output the digital pseudo-noise signal to a digital-to-analogue converter so as to generate an analogue pseudo-noise signal.

11. The pseudo-noise generator according to any preceding claim, wherein the pseudo-noise generator is provided as a field-programmable gate array.

12. An arbitrary waveform generator comprising:
a pseudo-noise generator according to any one of claims 1 to 11; and
means for generating an arbitrary waveform.

13. The arbitrary waveform generator according to claim 12, further comprising means for generating a combined output signal by combining an output pseudo-noise signal from the pseudo-noise generator with said arbitrary waveform.

14. A method of generating a pseudo-noise signal, the method comprising:
generating a plurality of pseudo-random numbers;
calculating a mean value of the plurality of pseudo-random numbers; and
outputting said average as a digital pseudo-noise signal.
